# EUROPEAN PATENT SPECIFICATION

(11) **EP 1 791 232 B1**
(45) Date of publication and mention of the grant of the patent: **08.01.2014**
(21) Application number: 05025785.6
(22) Date of filing: 25.11.2005
(51) Int. Cl.: H01T 23/00, B01D 53/32

(54) **Air cleaning apparatus using an ion generating apparatus**
Luftreinigungsvorrichtung mit Ionengenerator
Purificateur d'air avec générateur d'ions

(43) Date of publication of application: 30.05.2007
(73) Proprietor: Samsung Electronics Co., Ltd., Suwon-si, Gyeonggi-do, 443-742 (KR)
(72) Inventor: Jeon, Jun Sang No.843-504, Joogong 8th APT,, Suwon-Si, Geonggi-Do (KR); Kwon, Jun Hyoun No. 200-403, Hyundai Apt.,, Seoul (KR)
(74) Representative: Grünecker, Kinkeldey, Stockmair & Schwanhäusser

(56) References cited:
- US-A- 5 055 963
- US-A1- 2003 067 732
- US-B1- 6 252 233
- US-B1- 6 791 815
- US-B1- 6 850 403

## Description

### BACKGROUND OF THE INVENTION

### 1. Field of the Invention

The present invention relates to an air cleaning apparatus using an ion generating apparatus, and, more particularly, to an air cleaning apparatus using an ion generating apparatus for generating anions and cations.

### 2. Description of the Related Art

Recently, an air cleaner, in which an ion generator is incorporated, has been developed. In addition to an intrinsic function thereof to clean room air, such an air cleaner discharges cations and anions generated from the ion generator into the room air in accordance with a blowing operation to increase the concentration of ions in the room air, thereby meeting diverse requirements for user's health.

JP 2004-138268 refers to emitting electrons in a straight line from a needle electrode generated by corona discharge, and distantly delivering a generated ionic wind.

EP 1 625 890 A2 discloses an ion generating element and an ion generating apparatus that, by releasing positive and negative ions into a space, can decompose bacteria, mold spores, toxic substances, and the like floating in the air.

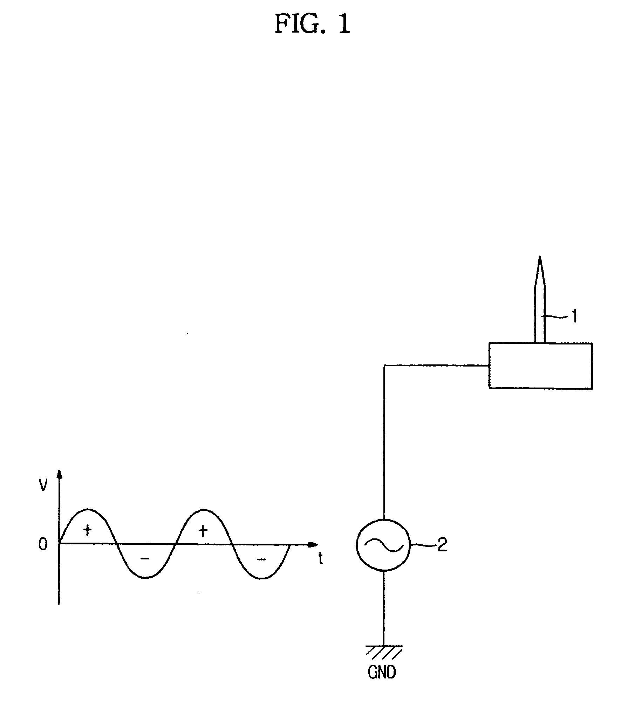

Referring to FIG. 1, a conventional ion generator, which may be incorporated in the above-mentioned air cleaner, is illustrated. As shown in FIG. 1, the ion generator includes a needle-shaped electrode 1, a ground terminal GND connected to a ground potential, and an AC power source 2 coupled between the needle-shaped electrode 1 and the ground terminal GND, wherein the AC power source applies to the needle-shaped electrode 1 an AC voltage having a sine waveform repeating an alternate polarity change at intervals of a certain time. When a positive sine waveform outputted from the AC power source 2 is applied to the needle-shaped electrode 1, charges are moved to air molecules in the air, thereby causing the air molecules to be ionized. As a result, cations are generated. Similarly, anions are generated when a negative sine waveform from the AC power source 2 is applied to the needle-shaped electrode 1.

However, such a conventional ion generator has a problem in that it is impossible to selectively generate cations or anions alone because an AC voltage having a continuous waveform which is alternately and periodically changed between positive (+) and negative (-) polarities is applied to the needle-shaped electrode 1. In other words, since cations alone have an effect capable of killing floating bacteria, and anions alone have an effect capable of providing comfortableness to the user, the conventional ion generator, which must generate both the cations and anions, may be inefficient.

In order to increase the amounts of cations and anions generated in the conventional ion generator, the AC voltage, which is applied to the needle-shaped electrode 1, must have a higher level. In this case, however, the peak-peak level of the AC voltage is excessively high, so that a separate insulation process is required. For this reason, there is a limitation on an increase in the amounts of generated cations and anions.

### SUMMARY OF THE INVENTION

The invention is defined according to independent claim 1. The dependent claims recite advantageous embodiments of the invention.

### BRIEF DESCRIPTION OF THE DRAWINGS

The above and other aspects of the invention will become apparent and more readily appreciated from the following description of the exemplary embodiments, taken in conjunction with the accompanying drawings in which:
FIG. 1 is a schematic view illustrating a conventional ion generator;
FIG. 2 is a block diagram illustrating an ion generating apparatus according to a first illustrative example;
FIG. 3 is a perspective view illustrating an ion generating element shown in FIG. 2;
FIG. 4a is a schematic view showing ions and a sterilizing substance generated when only a cation generator is driven;
FIG. 4b is a schematic view showing ions generated when only an anion generator is driven;
FIG. 5 is a block diagram illustrating an ion generating apparatus according to a second illustrative example;
FIG. 6 is a perspective view illustrating an air cleaning apparatus in which the ion generating apparatus according to an illustrative example is incorporated;
FIG. 7 is a block diagram illustrating a configuration of the air cleaning apparatus in which the ion generating apparatus according to an exemplary embodiment of the present invention is incorporated; and
FIG. 8 is a schematic view explaining selective discharge of cations and anions from the air cleaning apparatus of FIG. 7 into a room space.

### DETAILED DESCRIPTION OF THE EXEMPLARY EMBODIMENTS

Reference will now be made in detail to the exemplary embodiments of the present invention, examples of which are illustrated in the accompanying drawings, wherein like reference numerals refer to the like elements throughout. The exemplary embodiments are described below to explain the present invention by referring to the figures.

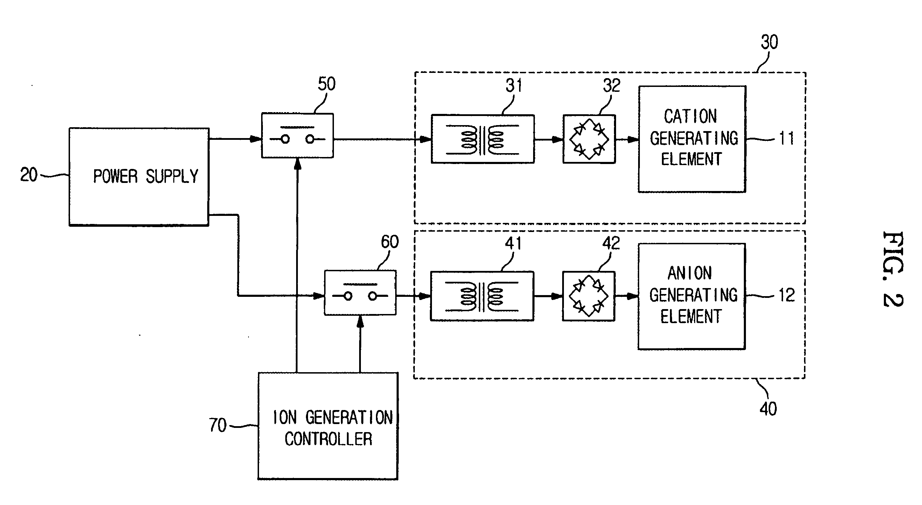

Referring to FIG. 2, an ion generating apparatus according to a first illustrative example is illustrated. As shown in FIG. 2, the ion generating apparatus includes a power supply 20 to supply an AC voltage, a cation generator 30, an anion generator 40, switching units 50 and 60, and an ion generation controller 70.

The cation generator 30 generates cations, using the AC voltage supplied from the power supply 20, and includes a high-voltage transformer 31 to boost the AC voltage supplied from the power supply 20, a rectifying circuit 32 to rectify the boosted AC voltage outputted from the high-voltage transformer 31 into a positive (+) DC voltage, and a cation generating element 11 to receive the positive (+) DC voltage from the rectifying circuit 32, and thus, to generate cations.

The anion generator 40 generates anions, using the AC voltage supplied from the power supply 20, and includes a high-voltage transformer 41 to boost the AC voltage supplied from the power supply 20, a rectifying circuit 42 to rectify the boosted AC voltage outputted from the high-voltage transformer 41 into a negative (-) DC voltage, and an anion generating element 12 to receive the negative (-) DC voltage from the rectifying circuit 42, and thus, to generate anions.

Each of the switching units 50 and 60 switches on/off the voltage supplied from the power supply 20 to an associated one of the cation generator 30 and anion generator 40.

The ion generation controller 70 selectively drives the switching unit 50 or switching unit 60 in accordance with an associated requirement, to selectively drive the cation generator 30 or anion generator 40. When it is required only to kill floating bacteria, this requirement may be satisfied by generating only cations (and ozone). On the other hand, where it is desired only to provide comfortableness to the user, this desire may be satisfied by only generating anions. Also, when it is required to eliminate factors which accelerate aging and factors harmful to the human body, this requirement may be satisfied by generating anions, together with cations (and ozone), to produce active hydrogen in accordance with coupling of the cations and anions. Thus, the user can control the ion generating apparatus to operate in a mode meeting the demands of the user.

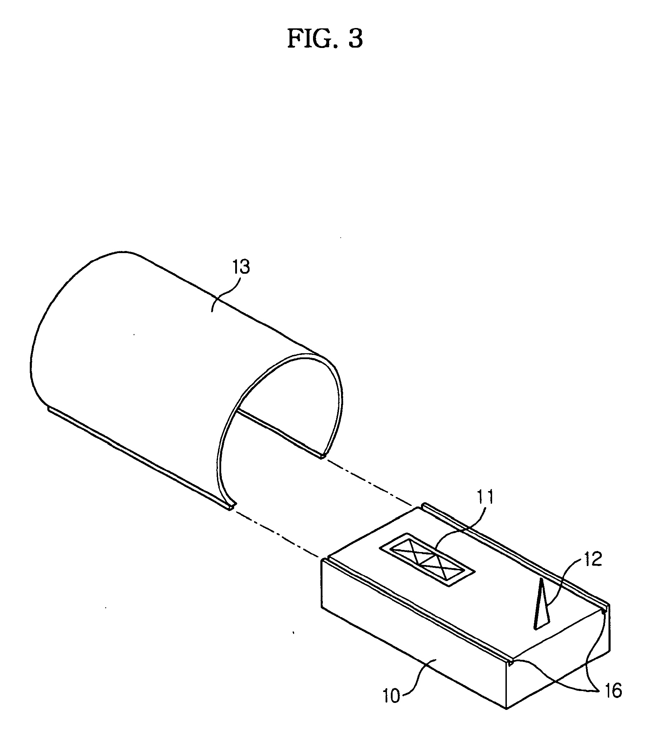

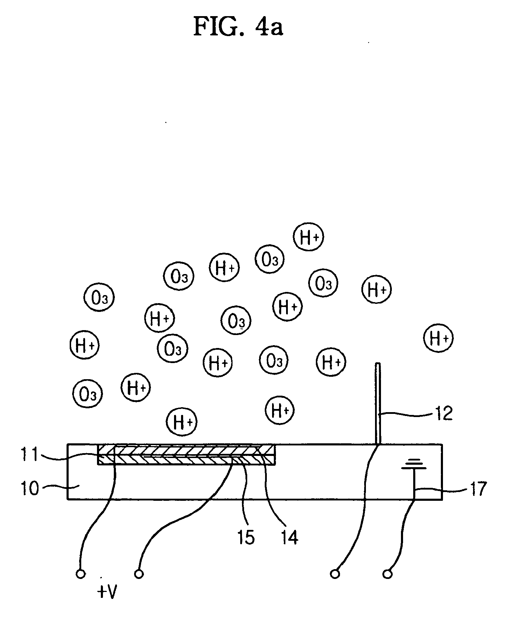

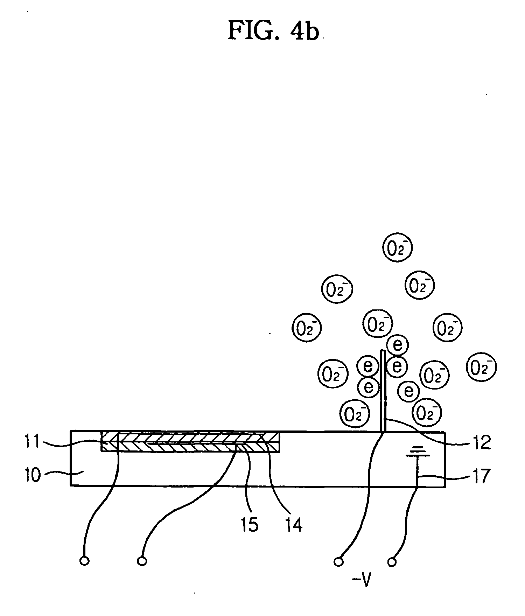

Hereinafter, the structure of the cation generating element 11 included in the cation generator 30 and the structure of the anion generating element 12 included in the anion generator 40 will be described with reference to FIGS. 3, 4a, and 4b. Both the cation generating element 11 and anion generating element 12 are mounted on an upper surface of a housing 10. A cover 13 is slidably engaged with longitudinal guide grooves 16 formed at the upper surface of the housing 10 so that the cover 13 is separably coupled to the housing 10. The cover 13 defines a diffusion range of ions generated from the cation generating element 11 and anion generating element 12 within a predetermined space.

The cation generating element 11 comprises a ceramic plate. The ceramic plate 11 is received in a recess formed on the upper surface of the housing 10 at one side of the housing 10, and then molded to be fixedly mounted to the upper surface of the housing 10. As shown in FIG. 4a, a discharge electrode 14 is provided at an upper surface of the ceramic plate 11 inside the ceramic plate 11. An induction electrode 15 is also provided at a middle portion of the ceramic plate 11 inside the ceramic plate 11 when viewed in a thickness direction of the ceramic plate 11. The portion of the ceramic plate 11 other than the discharge electrode 14 and induction electrode 15 is made of ceramic to form a protective layer.

A high positive (+) voltage is applied between the discharge electrode 14 and the induction electrode 15. The high positive voltage is preferably 3.9 kV to 4.3 kV, even though it may have other voltage ranges. When such a high positive voltage is applied between the discharge electrode 14 and the induction electrode 15, plasma discharge occurs at the ceramic plate 11, so that moisture (H₂O) existing in the air around the ceramic plate 11 is ionized, thereby generating cations, that is, hydrogen ions (H⁺), and ozone (O₃).

Meanwhile, the anion generating element 12 comprises a needle-shaped electrode. The needle-shaped electrode 12 is vertically protruded from the upper surface of the housing 10 at a position spaced apart from the ceramic plate 11 by a predetermined distance. It is desirable to appropriately determine the spacing between the ceramic plate 11 and the needle-spaced electrode 12, based on the size of the ceramic plate 11 and the height of the needle-shaped electrode 12, because the amount of hydrogen atoms formed from the hydrogen ions generated from the ceramic plate 11 varies depending on the spacing between the ceramic plate 11 and the needle-shaped electrode 12.

A high negative (-) voltage is applied between the needle-shaped electrode 12 and a ground electrode 17. The high negative voltage is preferably -3.2 kV to -3.6 kV, even through it may have other voltage ranges. When such a high negative voltage is applied between the needle-shaped electrode 12 and the ground electrode 17, plasma discharge occurs at the needle-shaped electrode 12, so that a large amount of electrons are discharged from the needle-shaped electrode 12 into the air. The electrons discharged into the air are very unstable, so that they are coupled with oxygen molecules (O₂) in the air, thereby forming super-oxide anions (O₂⁻).

Heretofore, the configuration to generate cations and/or anions in accordance with the first illustrative example has been described.

Now, a configuration to control the amount of generated ions by increasing the power level of the driving voltage in accordance with a second illustrative example will be described.

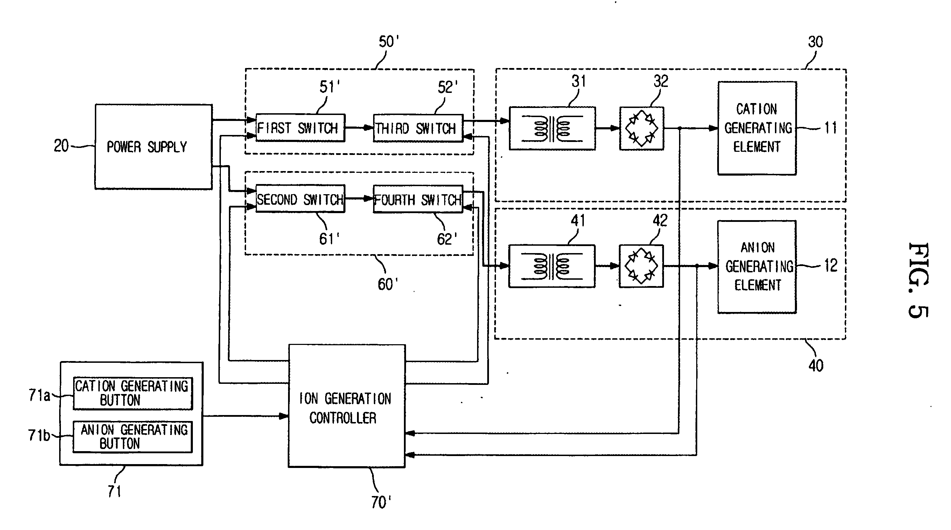

Referring to FIG. 5, an ion generating apparatus according to the second illustrative example is illustrated. In FIG. 5, constituent elements respectively corresponding to those of FIG. 2 will be denoted by the same reference numerals. As shown in FIG. 5, the ion generating apparatus includes a power supply 20 to supply an AC voltage, a cation generator 30, an anion generator 40, switching units 50' and 60', a key input unit 71, and an ion generation controller 70'

The cation generator 30 generates cations, using the AC voltage supplied from the power supply 20, and includes a high-voltage transformer 31 to boost the AC voltage supplied from the power supply 20, a rectifying circuit 32 to rectify the boosted AC voltage outputted from the high-voltage transformer 31 into a positive (+) DC voltage, and a cation generating element 11 to receive the positive (+) DC voltage from the rectifying circuit 32, and thus, to generate cations. The high-voltage transformer 31 has a primary coil, and a secondary coil to boost a voltage applied to the primary coil while maintaining the polarity of the applied voltage. Accordingly, when a positive (+) voltage is applied to the primary coil of the high-voltage transformer 31, a boosted positive (+) voltage is outputted from the secondary coil of the high-voltage transformer 31.

The anion generator 40 generates anions, using the AC voltage supplied from the power supply 20, and includes a high-voltage transformer 41 to boost the AC voltage supplied from the power supply 20, a rectifying circuit 42 to rectify the boosted AC voltage outputted from the high-voltage transformer 41 into a negative (-) DC voltage, and an anion generating element 12 to receive the negative (-) DC voltage from the rectifying circuit 42, and thus, to generate anions. The high-voltage transformer 41 has a primary coil, and a secondary coil to boost a voltage applied to the primary coil while changing the polarity of the applied voltage to an opposite polarity. Accordingly, when a positive (+) voltage is applied to the primary coil of the high-voltage transformer 41, a boosted negative (-) voltage is outputted from the secondary coil of the high-voltage transformer 41

The switching unit 50' is connected between the power supply 20 and the cation generator 30, and the switching unit 60' is connected between the voltage source 20 and the anion generator 40. The switching units 50' and 60' include a first switch 51' and a second switch 61', respectively. Each of the first switch 51' and second switch 61' switches on/off the supply of the AC voltage to an associated one of the cation generator 30 and anion generator 40. The switching units 50' and 60' also include a third switch 52' and a fourth switch 62', respectively. Each of the third switch 52' and fourth switch 62' controls the level of the AC voltage to be supplied to an associated one of the cation generator 30 and anion generator 40. Preferably, each of the third switch 52' and fourth switch 62' comprises a metal-oxide semiconductor field-effect transistor (MOSFET).

The key input unit 71 includes a cation generating button 71a to drive the cation generator 30, and an anion generating button 72a to drive the anion generator 40.

The ion generation controller 70' responds to a key input from the cation generating button 71a or anion generating button 72a to drive an associated one of the first and second switches 51' and 61', and thus, to selectively drive the cation generator 30 or anion generator 40. In accordance with the selective driving of the cation generator 30 or anion generator 40 under the control of the ion generation controller 70', cations (and ozone) or anions are selectively generated. Thus, the user can control the ion generating apparatus to operate in a mode meeting the demands of the user.

The ion generation controller 70' also performs a control operation to measure the voltage applied to each of the cation generating element 11 and anion generating element 12, and to vary the ON or OFF time of the associated third switch 52' or fourth switch 62', based on the result of the measurement. In accordance with this control operation, the ion generation controller 70' varies the AC voltage supplied to each of the high-voltage transformers 31 and 41, to control the boosting voltage level of the associated high-voltage transformer 31 or 41, and thus, to control the amount of ions generated from the associated ion generating element 11 or 12.

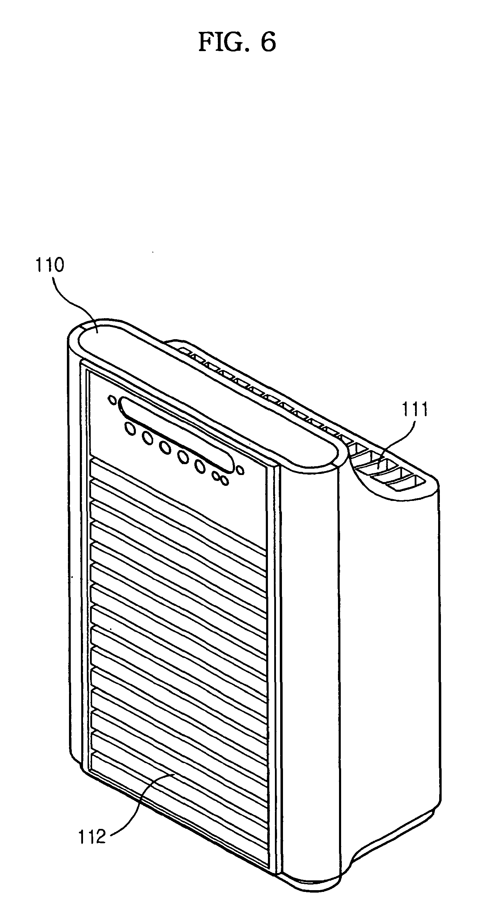

Hereinafter, an air cleaning apparatus, in which the above-described ion generating apparatus according to an illustrative example is incorporated, will be described with reference to FIG. 6.

As shown in FIG. 6, the air cleaning apparatus includes a body 110, in which the ion generating apparatus according an illustrative example is installed, an inlet 112 formed at a front wall of the body 110, and an outlet 111 formed at a top wall of the body 110. In accordance with this configuration, air is sucked from a room space into the interior of the body 110 through the inlet 112, and is then cleaned in accordance with a cleaning operation of the ion generating apparatus. The cleaned air is then discharged into the room space through the outlet 111, together with cations and anions generated from the ion generating apparatus.

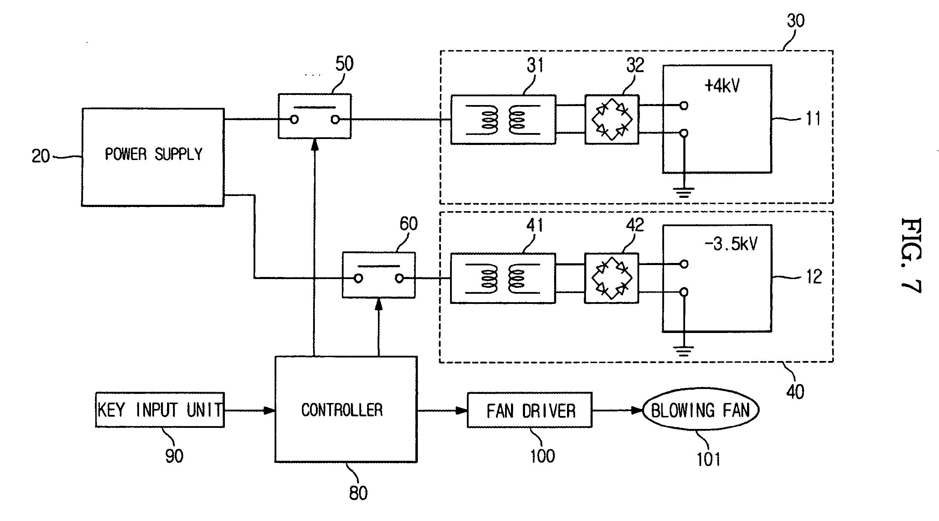

FIG. 7 shows a detailed configuration of the air cleaning apparatus in which the ion generating apparatus according to the present invention is incorporated. In FIG. 7, constituent elements respectively corresponding to those in FIG. 2 are denoted by the same reference numerals. As shown in FIG. 7, the air cleaning apparatus includes a power supply 20, a cation generator 30, an anion generator 40, switching units 50 and 60, a controller 80, a key input unit 90, and a fan driver 100.

As described above, the cation generator 30 generates cations (and ozone), using the AC voltage supplied from the power supply 20, and includes a high-voltage transformer 31 to boost the AC voltage supplied from the power supply 20, a rectifying circuit 32 to rectify the boosted AC voltage outputted from the high-voltage transformer 31 into a positive (+) DC voltage, and a cation generating element 11 to receive the positive (+) DC voltage from the rectifying circuit 32, and thus, to generate cations. The anion generator 40 generates anions, using the AC voltage supplied from the power supply 20, and includes a high-voltage transformer 41 to boost the AC voltage supplied from the power supply 20, a rectifying circuit 42 to rectify the boosted AC voltage outputted from the high-voltage transformer 41 into a negative (-) DC voltage, and an anion generating element 12 to receive the negative (-) DC voltage from the rectifying circuit 42, and thus, to generate anions.

Each of the switching units 50 and 60 switches on/off the voltage to be supplied from the power supply 20 to an associated one of the cation generator 30 and anion generator 40.

The fan driver 100 drives a blowing fan 101 to suck air from a room space through the inlet 112 provided at the body 110, and to discharge the air in a cleaned state into the room space through the outlet 111.

The key input unit 90 includes various functional buttons to drive the anion generator 40 alone, the cation generator 30 alone, or both the cation generator 30 and anion generator 40, or to stop the driving of both the cation generator 30 and anion generator 40.

During a cleaning operation, the controller 80 performs a control operation to drive the blowing fan 101 through the fan driver 100, and thus, to clean room air. In addition to this control operation, the controller 80 also drives one or both of the switching units 50 and 60 or stops the driving of both the switching units 50 and 60, in response to a key input from the key input unit 90, to drive the anion generator 40 alone, the cation generator 30 alone, or both the cation generator 30 and anion generator 40, or to stop the driving of both the cation generator 30 and anion generator 40. Accordingly, it is possible to control the ion generating apparatus to meet various operation conditions required for the ion generating apparatus, while performing an operation to clean room air. For example, when it is required to kill floating bacteria, this requirement may be satisfied by only generating cations (and ozone). On the other hand, where it is desired only to provide comfortableness to the user, this desire may be satisfied by only generating anions. Also, when it is required to eliminate factors which accelerate aging and factors harmful to the human body, this requirement may be satisfied by generating anions, together with cations (and ozone), to produce active hydrogen in accordance with coupling of the cations and anions. Thus, the user can control the ion generating apparatus to operate in a mode meeting the demands of the user.

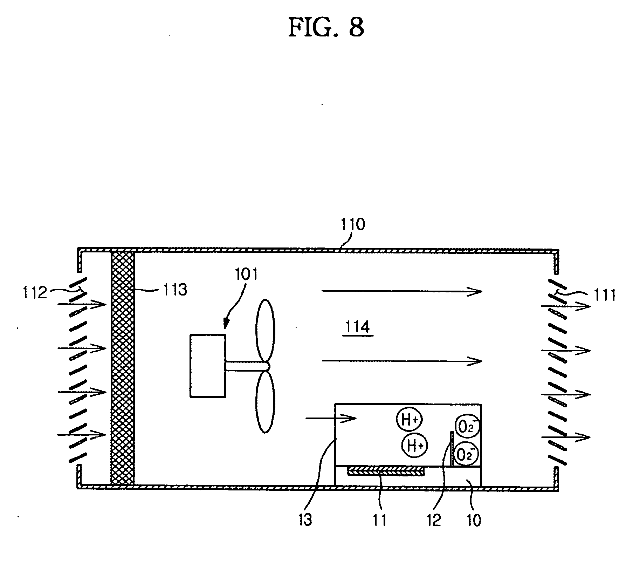

As shown in FIG. 8, the ion generating apparatus is installed in an air discharge path 114. When it is desired to clean room air, the blowing fan 101 arranged in the body 110 is first driven to suck the room air into the body 110 through the inlet 112. The sucked air then passes through the filter 113, so that impurities are removed from the air by the filter 113. Thus, the air is cleaned. The cleaned air is discharged into the room space through the outlet 111. In this case, the ion generating apparatus may operate, simultaneously with the driving of the blowing fan 101. When the ion generating apparatus operates to generate cations alone, anions alone, or both the cations and anions in accordance with a user's selection, the cations or anions generated from the ion generating apparatus or active hydrogen, which is produced in accordance with coupling of cations and anions occurring when both the cations and anions are generated from the ion generating apparatus, is discharged into the room space, together with the cleaned air.

As apparent from the above description, in accordance with the present invention, it is possible to selectively control generation of cations and anions to meet the demands of the user while maximizing the amount of the generated ions. Accordingly, it is possible to actively kill floating bacteria, to provide comfortableness to the user, and to eliminate factors which accelerate aging and factors harmful to the human body.

## Claims

1. An air cleaning apparatus comprising:
a body (110) including a power supply (20);
an inlet (112) provided at the body;
an outlet (111) provided at the body;
a blowing fan (101) arranged in the body;
a filter (113) such that impurities are removed from the air by the filter (113);
a controller (80) which controls an operation of the air cleaning apparatus;
an ion generating device which generates cations and anions, the ion generating device being arranged in an air flow path defined in the body by the inlet (112), the outlet (111) and the blowing fan (101), wherein the ion generating device comprises:
a cation generator (30) which generates cations using a voltage supplied from the power supply; and
an anion generator (40) which generates anions, using the voltage supplied from the power supply (20), the anion generator (40) being separated from the cation generator (30), and
wherein the controller (80) controls an operation of at least one of the cation generator (30) and anion generator (40) of the ion generating device;
wherein the cation generator (30) comprises:
a high-voltage transformer (31) which boosts the voltage supplied from the power supply (20);
a rectifying circuit (32) which rectifies a boosted voltage output from the high-voltage transformer for an AC to DC conversion of the boosted voltage; and
a cation generating element (11) which receives a positive DC voltage from the rectifying circuit (32), and generates cations using the positive DC voltage;
wherein the cation generating element (11) comprises a ceramic plate (11);
the ceramic plate (11) comprises a discharge electrode (14) and an induction electrode (15), which are arranged inside the ceramic plate (11); and
the discharge electrode (14) and the induction electrode (15) are connected to a positive DC voltage source of the rectifying circuit (32);
wherein the anion generator (40) comprises:
a high-voltage transformer (41) which boosts the voltage supplied from the power supply (20);
a rectifying circuit (42) which rectifies a boosted voltage output from the high-voltage transformer (41) for an AC to DC conversion of the boosted voltage; and
an anion generating element (12) which receives a negative DC voltage from the rectifying circuit (42), and generates anions from the negative DC voltage;
wherein the anion generating element (12) comprises a needle-shaped electrode (12); and
the needle-shaped electrode (12) is connected to a negative DC voltage source of the rectifying circuit (42);
wherein air passes first the cation generator (30) and then the anion generator (40).

2. The air cleaning apparatus according to claim 1, further comprising:
a switching unit (50', 60') controlled by the controller (80), the switching unit (50', 60') including a switch (51', 61') to switch on or off the voltages supplied form the power supply (20) to at least one of the cation generator (30) and anion generator (40) of the ion generating device.

3. The air cleaning apparatus according to claim 2, further comprising:
a switch (52', 62') which controls a level of the voltage supplied to at least one of the cation generator (30) and the anion generator (40).

4. The air cleaning apparatus according to claim 1, wherein the cation generator (30) further generates ozone.

5. The air cleaning apparatus according to claim 2, further comprising:
a key input unit (71) including a cation generating button (71a) and an anion generating button (71 b).

## Patentansprüche

1. Luftreinigungsvorrichtung, umfassend:
ein Gehäuse (110) mit einem Netzgerät(20);
eine Einlassöffnung (112), die am Gehäuse vorgesehen ist;
eine Auslassöffnung (111), die am Gehäuse vorgesehen ist;
einen Blaslüfter (101), der im Gehäuse angeordnet ist;
einen Filter (113), so dass Verunreinigungen aus der Luft von dem Filter (113) entfernt werden;
eine Steuereinheit (80), die einen Betrieb der Luftreinigungsvorrichtung steuert;
eine Ionenerzeugungsvorrichtung, die Kationen und Anionen erzeugt, wobei die Ionenerzeugungsvorrichtung in einem Strömungsweg der Luft angeordnet ist, der in dem Gehäuse definiert ist durch die Einlassöffnung (112), die Auslassöffnung (111) und den Blaslüfter (101), wobei die Ionenerzeugungsvorrichtung umfasst:
einen Kationenerzeuger (30), der Kationen mittels einer Spannung, die von dem Netzgerät bereitgestellt wird, erzeugt, und
einen Anionenerzeuger (40), der Anionen mittels der Spannung, die vom Netzgerät (20) bereitgestellt wird, erzeugt, wobei der Anionenerzeuger (40) von dem Kationenerzeuger (30) getrennt ist, und
wobei die Steuereinheit (80) einen Betrieb von wenigstens einem aus dem Kationenerzeuger (30) und dem Anionenerzeuger (40) der
Ionenerzeugungsvorrichtung steuert;
wobei der Kationenerzeuger (30) umfasst:
einen Hochspannungstransformator (31), der die von dem Netzgerät (20) bereitgestellte Spannung erhöht;
eine Gleichrichterschaltung (32), die eine erhöhte Spannung, die von dem Hochspannungstransformator ausgegeben wird, gleichrichtet für eine Umwandlung von Wechselspannung auf Gleichspannung der erhöhten Spannung; und
ein Kationenerzeugungselement (11), das eine positive Gleichspannung von der Gleichrichterschaltung (32) erhält, und Kationen unter Verwendung der positiven Gleichspannung erzeugt;
wobei das Kationenerzeugungselement (11) eine keramische Platte (11) umfasst;
wobei die keramische Platte (11) eine Entladungselektrode (14) und eine Induktionselektrode (15) umfasst, die innerhalb der keramischen Platte angeordnet sind; und
die Entladungselektrode (14) und die Induktionselektrode (15) mit einer positiven Gleichspannungsquelle der Gleichrichterschaltung (32) verbunden sind;
wobei der Anionenerzeuger (40) umfasst:
einen Hochspannungstransformator (41), der die von dem Netzgerät (20) bereitgestellte Spannung erhöht;
eine Gleichrichterschaltung (42) die eine erhöhte Spannung, die von dem Hochspannungstransformator (41) ausgegeben wird, gleichrichtet für eine Umwandlung von Wechselspannung auf Gleichspannung der erhöhten Spannung; und
ein Anionenerzeugungselement (12), das eine negative Gleichspannung von der Gleichrichterschaltung (42) erhält, und Anionen unter Verwendung der negativen Gleichspannung erzeugt;
wobei das Anionenerzeugungselement (12) eine nadelförmige Elektrode (12) umfasst; und
die nadelförmige Elektrode (12) mit einer negativen Gleichspannungsquelle der Gleichrichterschaltung (42) verbunden ist;
wobei Luft zunächst den Kationenerzeuger (30) und dann den Anionenerzeuger (40) passiert.

2. Luftreinigungsvorrichtung gemäß Anspruch1, ferner umfassend:
eine Schalteinheit (50', 60'), die von der Steuereinheit (80) gesteuert wird, wobei die Schalteinheit (50', 60') einen Schalter (51', 61') zum An- oder Ausschalten der von dem Netzgerät (20) an wenigstens einen von dem Kationenerzeuger (30) und dem Anionenerzeuger (40) der Ionenerzeugungsvorrichtung bereitgestellten Spannungen umfasst.

3. Luftreinigungsvorrichtung gemäß Anspruch 2, ferner umfassend:
einen Schalter (52', 62'), der einen Pegel der Spannung, die an wenigstens einen von dem Kationenerzeuger (30) und dem Anionenerzeuger (40) bereitgestellt wird, steuert.

4. Luftreinigungsvorrichtung gemäß Anspruch1, wobei der Kationenerzeuger (30) ferner Ozon erzeugt.

5. Luftreinigungsvorrichtung gemäß Anspruch2, ferner umfassend:
eine Tasteneingabeinheit (71) mit einer Kationenerzeugungstaste (71 a) und mit einer Anionenerzeugungstaste (71 b).

## Revendications

1. Purificateur d'air comprenant :
un corps (110) incluant une alimentation (20) ;
une entrée (112) prévue sur le corps ;
une sortie (111) prévue sur le corps ;
un ventilateur soufflant (120) agencé dans le corps ;
un filtre (113) tel que les impuretés sont éliminées de l'air par le filtre (113) ;
un contrôleur (80) qui commande le fonctionnement du purificateur d'air ;
un dispositif générateur d'ions qui génère des cations et des anions, le dispositif générateur d'ions étant agencé dans le trajet d'écoulement d'air défini dans le corps par l'entrée (112), la sortie (111) et le ventilateur soufflant (101), dans lequel le dispositif générateur d'ions comprend :
un générateur de cations (30) qui génère des cations en utilisant une tension fournie par l'alimentation ; et
un générateur d'anions (40) qui génère des anions, en utilisant la tension fournie par l'alimentation (20), le générateur d'anions (40) étant séparé du générateur de cations (30), et
dans lequel le contrôleur (80) commande le fonctionnement d'au moins un générateur parmi le générateur de cations (30) et le générateur d'anions (40) du dispositif générateur d'ions ;
dans lequel le générateur de cations (30) comprend :
un transformateur haute tension (31) qui augmente la tension fournie par l'alimentation (20) ;
un circuit redresseur (32) qui redresse la sortie de tension augmentée provenant du transformateur haute tension pour convertir la tension augmentée de courant alternatif en courant continu ; et
un élément générateur de cations (11) qui reçoit une tension positive continue du circuit redresseur (32) et génère des cations en utilisant la tension positive continue ;
dans lequel l'élément générateur de cations (11) comprend une plaque en céramique (11) ;
la plaque en céramique (11) comprend une électrode de décharge (14) et une électrode d'induction (15), qui sont agencées à l'intérieur de la plaque en céramique (11) ; et
l'électrode de décharge (14) et l'électrode d'induction (15) sont connectées à une source de tension positive continue du circuit redresseur (32) ;
dans lequel le générateur d'anions (40) comprend :
un transformateur haute tension (41) qui augmente la tension fournie par l'alimentation (20) ;
un circuit redresseur (42) qui redresse la sortie de tension augmentée provenant du transformateur haute tension (41) pour convertir la tension augmentée de courant alternatif en courant continu ; et
un élément générateur d'anions (12) qui reçoit une tension négative continue du circuit redresseur (42) et génère des anions à partir de la tension négative continue ;
dans lequel l'élément générateur d'anions (12) comprend une électrode en forme d'aiguille (12) ; et
l'électrode en forme d'aiguille (12) est connectée à une source de tension négative continue du circuit redresseur (42) ;
dans lequel l'air passe d'abord par le générateur de cations (30), puis par le générateur d'anions (40).

2. Purificateur d'air selon la revendication 1, comprenant en outre :
une unité de commutation (50', 60') commandée par le contrôleur (80), l'unité de commutation (50', 60') incluant un commutateur (51', 61') pour activer ou désactiver les tensions fournies par l'alimentation (20) vers au moins un générateur parmi le générateur de cations (30) et le générateur d'anions (40) du dispositif générateur d'ions.

3. Purificateur d'air selon la revendication 2, comprenant en outre :
un commutateur (52', 62') qui commande le niveau de la tension fournie à au moins un générateur parmi le générateur de cations (30) et le générateur d'anions (40).

4. Purificateur d'air selon la revendication 1, dans lequel le générateur de cations (30) génère en outre de l'ozone.

5. Purificateur d'air selon la revendication 2, comprenant en outre :
une unité d'entrée à touches (71) incluant un bouton de génération de cations (71a) et un bouton de génération d'anions (71b).
